# EUROPÄISCHE PATENTSCHRIFT

(11) **EP 0 583 282 B1**
(45) Veröffentlichungstag und Bekanntmachung des Hinweises auf die Patenterteilung: **09.08.1995**
(21) Anmeldenummer: 92909126.2
(22) Anmeldetag: 22.04.1992
(51) Int. Cl.: B62D 65/00

(54) **BEARBEITUNGSSTATION FÜR WERKSTÜCKE, INSBESONDERE FAHRZEUGKAROSSERIEN IN EINER TRANSFERLINIE**
PROCESSING STATION FOR WORKPIECES, ESPECIALLY VEHICLE BODIES ON A TRANSFER LINE
STATION D'USINAGE POUR PIECES A USINER, EN PARTICULIER CARROSSERIES DE VEHICULES DANS UNE CHAINE DE TRANSFERT

(30) Priorität: 03.05.1991 DE 9105490 U
(43) Veröffentlichungstag der Anmeldung: 23.02.1994
(73) Patentinhaber: KUKA Schweissanlagen & Roboter GmbH, D-86165 Augsburg (DE)
(72) Erfinder: ZIMMER, Ernst, D-8904 Friedberg (DE); MAISCHBERGER, Johann, D-8901 Dinkelscherben (DE); STURM, Thomas, D-8061 Sulzemoos/Wiedenzhausen (DE); MEYER, Heinz, D-8900 Ausgburg (DE)
(74) Vertreter: Ernicke, Hans-Dieter, Dipl.-Ing.
(86) Internationale Anmeldenummer: EP9200887
(87) Internationale Veröffentlichungsnummer: WO9219486

(56) Entgegenhaltungen:
- EP-A- 0 296 369
- DE-U- 8 812 396
- GB-A- 2 172 555
- GB-A- 2 198 702

## Beschreibung

Die Erfindung betrifft eine Bearbeitungsstation für Werkstücke, insbesondere Fahrzeugkarosserien, in einer Transferlinie mit den Merkmalen im Oberbegriff des Hauptanspruchs.

Eine solche Bearbeitungsstation ist aus der EP-A 0 296 369 bekannt. Hier sind Magazine mit auswechselbaren Spannrahmen zu beiden Seiten neben der Transferlinie angeordnet und bezogen auf die Transferlinie vor und/oder hinter der Arbeitsstelle positioniert. Die einzelnen Magazine haben dabei jeweils zwei oder mehr parallel zueinander angeordnete Halterungen für die Spannrahmen, welche quer zur Transportrichtung hintereinander angeordnet sind. Eine Transportvorrichtung bewegt die Spannrahmen in einer Ebene parallel zur Transferlinie von den Halterungen zu einer quer dazu versetzbaren Zustellvorrichtung hin und zurück. Sie besitzt eine Plattform, die auch die Roboter trägt. Die Plattform muß zur Spannrahmenübernahme fluchtend zu einer Stellung gebracht werden, in der die vorbereiteten Spannrahmen aus den jeweiligen Halterungen abgezogen werden können. Dabei muß die Plattform durch die Reihenanordnung der Halterungen unterschiedlich weite Positionierbewegungen in verschiedenen Nachschubebenen ausführen. Die Taktzeit der bekannten Anlage hängt also davon ab, wie lang die nacheinander ablaufenden Bewegungsphasen dauern.

Eine andere Bearbeitungsstation ist aus dem DE-GM 88 12 396.0 bekannt. Sie dient zum Schweißen von Fahrzeugkarosserien in einer Transferlinie und arbeitet mit wechselbaren Spannrahmen, die Spann- und zum Teil auch Bearbeitungswerkzeuge für die Fahrzeugkarosserie tragen. Die Spannrahmen sind auf den Fahrzeugtyp adaptiert und lassen sich bei einem Typenwechsel austauschen. Sie sind hierzu in zwei drehbaren Magazinen bevorratet, die beidseits der Transferlinie in Höhe der Arbeitsstelle angeordnet sind. Diese Anordnung hat zum einen den Nachteil, daß für den Magazinwechsel relativ viel Zeit benötigt wird. Zum anderen haben die Bearbeitungsvorrichtungen, insbesondere Schweiß- und Montageroboter, durch die seitlichen Magazine wenig Platz. Im Grunde können nur Portalroboter eingesetzt werden, die oberhalb der Arbeitsstelle verfahrbar gelagert sind und die die Fahrzeugkarosserie nur von oben her erreichen können.

Es ist Aufgabe der vorliegenden Erfindung, eine Bearbeitungsstation aufzuzeigen, die mehr Flexibilität hinsichtlich der Bearbeitungsvorrichtungen und der Wechselzeiten bietet.

Die Erfindung löst diese Aufgabe mit den Merkmalen im Hauptanspruch.
Die Magazine sind erfindungsgemäß nun nicht mehr in Höhe der Arbeitsstelle, sondern längs der Transferlinie versetzt hierzu angeordnet. An der Arbeitsstelle entsteht so beidseits der Transferlinie Platz für die Anordung seitlicher Bearbeitungsvorrichtungen. Letztere können in beliebiger Weise gestaltet sein und sind vorzugsweise als Roboter mit den jeweils erforderlichen Werkzeugen, insbesondere Schweiß- und Montagewerkzeugen ausgebildet. Der Platzbedarf der Bearbeitungsstation quer zur Transferlinie ist gering.

Die Magazine können vor- und/oder hinter der Arbeitsstelle angeordnet sein. Die Spannrahmen werden zum Wechseln dann längs der Transferlinie verfahren. In der einfachsten und platzsparendsten Ausführungsform ist jeder Arbeitsstelle nur ein einzelnes Magazin zugeordnet. In der bevorzugten Ausführungsform sind vier Magazine angeordnet, die den Arbeitsstellen paarweise zugeordnet sind.

Durch die versetzte Magazinanordnung lassen sich die Taktzeiten für einen Spannrahmenwechsel verkürzen. Besonders stark ist der Taktzeitgewinn bei einer Anordnung von vier Magazinen, bei denen je zwei durch eine gemeinsame Transportvorrichtung über die Arbeitsstelle hinweg verbunden sind. In einem Hub kann hierbei nämlich der alte Spannrahmen entfernt und der neue zur Arbeitsstelle gebracht werden.

Die Magazine können unterschiedlich ausgebildet sein, wobei sie jeweils mindestens zwei Ladestellen aufweisen. Die Magazine können sich nach Art von Trommeln um feste Achsen drehen oder in der Art von Paternoster-Aufzügen oder dergleichen umlaufen. Ihre Achsen können hierbei unterschiedliche Richtungen einnehmen. Zur Optimierung der Bearbeitungsstation mit Hinblick auf Störkreisfreiheit und Wechselzeiten können die Magazine eigenständig quer zur Transferlinie bewegbar sein. Aus dem gleichen Grund empfiehlt sich an der Arbeitsstelle auch die Anordnung einer Zustellvorrichtung, vorzugsweise in Form eines Gestells, das die zugeführten Spannrahmen aufnimmt und positionsgerecht gegenüber den Fahrzeugkarosserien zustellt und fixiert. Diese Einrichtungen können unterschiedlich ausgebildet sein, in den Unteransprüchen sind vorteilhafte, praktische Ausgestaltungen hierzu angegeben.

Die Erfindung ist in den Zeichnungen beispielsweise und schematisch dargestellt. Im einzelnen zeigen:
- Fig. 1:: eine Draufsicht auf eine komplette Bearbeitungsstation in einer Transferlinie mit zwei Arbeitsstellen und vier Magazinen mit vertikalen Achsen,
- Fig. 2:: eine Alternative in Halbdarstellung mit nur einem Magazin pro Arbeitsstelle,
- Fig. 3:: eine Variante zu Fig. 1 in Halbdarstellung mit liegenden Magazinen und horizontalen Drehachsen,
- Fig. 4:: eine Seitenansicht der Zustellvorrichtung für einen Spannrahmen an der Arbeitsstelle entsprechend Pfeil IV von Fig. 1 in Wechselstellung,
- Fig. 5:: die Zustellvorrichtung von Fig. 4 in Arbeitsstellung des Spannrahmens an der Karosserie,
- Fig. 6:: eine alternative Transportvorrichtung für die Spannrahmen in Seitenansicht entsprechend Pfeil VI von Fig. 1 und
- Fig. 7:: eine detailliertere Draufsicht auf ein Magazin mit vertikaler Drehachse entsprechend Fig. 1.

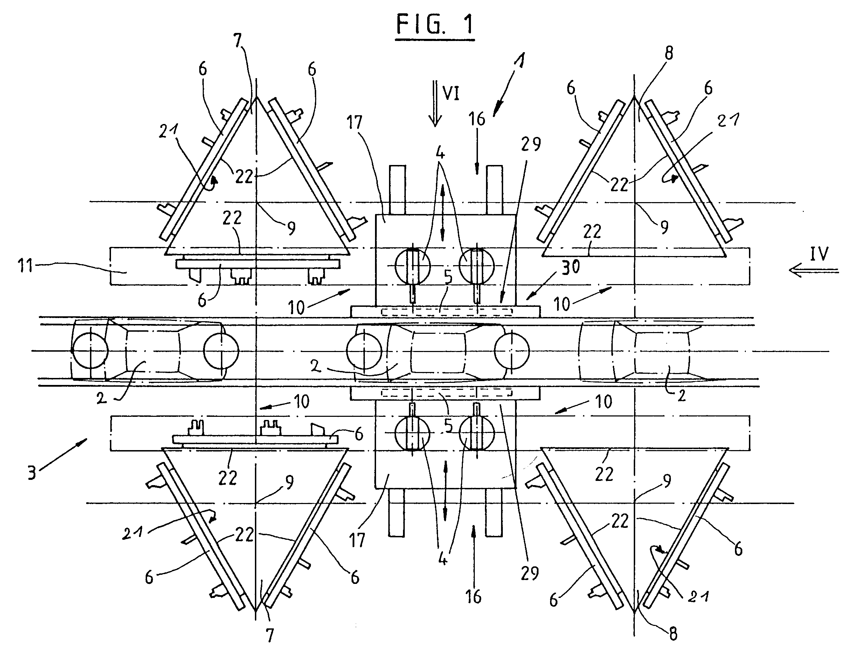

In Fig. 1 - 3 ist eine Bearbeitungsstation (1) innerhalb einer Transferlinie (3) dargestellt. Es handelt sich hierbei um eine Schweißstation, in der entlang der Transferlinie (3) zugeführte Fahrzeugkarosserien (2) geheftet und geschweißt werden. Anstelle von Fahrzeugkarosserien können auch andere Werkstücke (2) bearbeitet werden. Es kann sich auch um beliebig anders geartete Bearbeitungsvorgänge, wie Drehen, Bohren, Montieren oder dergleichen handeln. Die Bearbeitungsstation (1) ist mit vier Bearbeitungsvorrichtungen (4) ausgerüstet, die paarweise beidseits neben der Transferlinie (3) an der Arbeitsstelle (29) angeordnet sind. Im gezeigten Ausführungsbeispiel handelt es sich um sechsachsige Industrieroboter (4), die Schweißwerkzeuge, insbesondere Punktschweißzangen, führen. Die Bearbeitungsvorrichtungen (4) können alternativ auch völlig anders ausgebildet sein. Zusätzlich können an der Arbeitsstelle (29) auch noch Portalroboter oder dergleichen andere Bearbeitungsvorrichtungen vorgesehen sein.

Die Fahrzeugkarosserien (2) müssen für den Schweißvorgang mit ihren Einzelteilen lagegerecht gespannt werden. Hierzu sind an den jeweiligen Karosserietyp angepaßte Spannrahmen (5,6) vorgesehen, die in Magazinen (7,8) bevorratet sind und bei einem Typenwechsel der Fahrzeugkarosserie schnell ausgetauscht werden können. Mit der Bezugsnummer (5) werden in den Zeichnungen jeweils die an der Arbeitsstelle (29) und in Aktion befindlichen Spannrahmen bezeichnet, die in Warteposition an den Magazinen (7,8) befindlichen Spannrahmen werden mit der Bezugsziffer (6) bezeichnet.

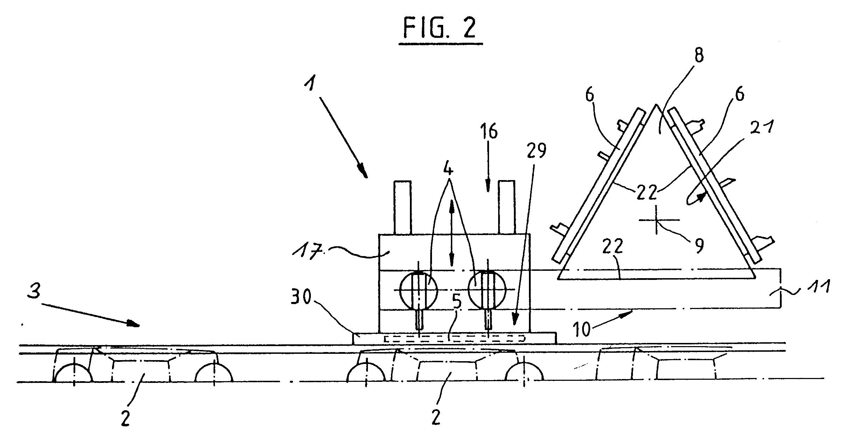

Die Magazine (7,8) sind längs der Transferlinie (3) versetzt vor und/oder hinter der Arbeitsstelle (29) angeordnet. In der bevorzugten Ausführungsform von Fig. 1 sind vier Magazine (7,8) vorgesehen, die paarweise zu beiden Seiten neben der Transferlinie (3) und jeweils vor und hinter der Arbeitsstelle (29) angeordnet sind. In der alternativen Ausführungsform von Fig. 2 ist jeder der beiden Arbeitsstellen (29) nur ein Magazin (8) zugeordnet. In Fig. 1 und 2 sind die Magazine (7,8) in Form von dreieckigen Trommelgestellen (21) dargestellt, die um vertikale Drehachsen (9) schwenken können. Die Magazine (7,8) beziehungsweise Trommelgestelle (21) können auch mehreckig ausgebildet sein und entsprechend viele Ladestellen (22) für Spannrahmen (6) aufweisen.

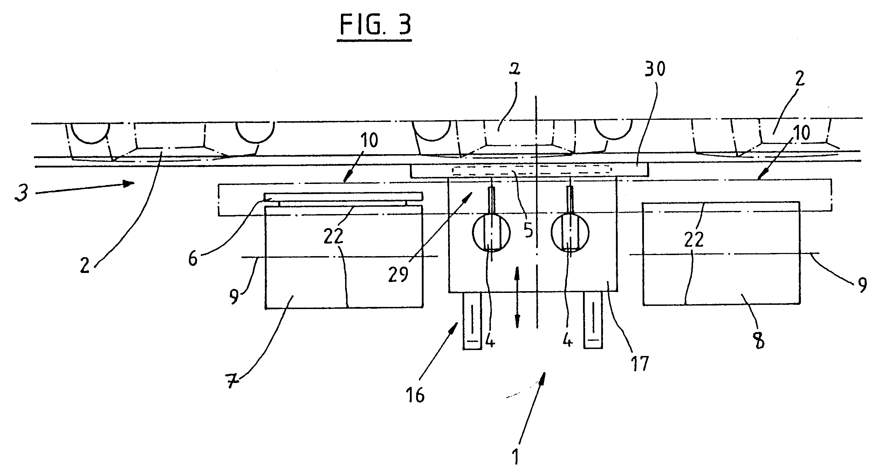

Fig. 3 zeigt eine weitere Alternative mit liegenden Magazinen (7,8), die hier als im Querschnitt viereckige Trommelgestelle (21) ausgebildet sind und horizontale Drehachsen (9) aufweisen. Die Ladestellen (22) befinden sich bei dieser Variante am Trommelmantel, wobei die Drehachsen (9) sich längs der Transferlinie (3) erstrecken. Alternativ können die horizontalen Drehachsen (9) auch quer zur Transferlinie (3) stehen, wobei die Ladestellen (22) stirnseitig an den dann eher radförmigen Magazinen (7,8) angeordnet sind.

Für den Verkehr der Spannrahmen (5,6) von der Arbeitsstelle (29) zu den Magazinen (7,8) sind Transportvorrichtungen (10) vorgesehen. Im Ausführungsbeispiel der Figuren 1 und 3 mit vier Magazinen (7,8) übergreifen die Transportvorrichtungen (10) die Arbeitsstelle (29) und beide zugeordnete Magazine (7,8). Es ist also für jeweils zwei Magazine (7,8) eine gemeinsame Transportvorrichtung (10) vorgesehen.

Die Transportvorrichtungen (10) weisen jeweils Führungen (11) für die Spannrahmen (5,6) auf, die längs der Transferlinie (3) ausgerichtet sind und an denen die Spannrahmen (5,6) mittelbar oder unmittelbar geführt sind. Die Transportvorrichtungen (10) weisen Schleppeinrichtungen (12) für die Bewegung der Spannrahmen (5,6) entlang der Führungen (11) auf.

Die Magazine (7,8) sind nahe der Transferlinie (3) angeordnet, aus Störkreisgründen jedoch gegenüber dem in Arbeitsstellung befindlichen Spannrahmen (5) etwas zurückversetzt angeordnet. Der Wechsel der Spannrahmen (5,6) findet damit mit etwas Querabstand zur Transferlinie (3) statt, wobei auch die Führungen (11) entsprechend zur Transferlinie (3) beabstandet sind.

Für die Zuführung der eingewechselten Spannrahmen (5) in die Arbeitsposition an der Fahrzeugkarosserie (2) ist an den Arbeitsstellen (29) jeweils eine Zustellvorrichtung (16) vorgesehen. Sie besteht aus einem Gestell (18), das den eingewechselten Spannrahmen (5) hält und führt. Das Gestell (18) ist quer zur Transferlinie (3) auf einem Schlitten (17) beweglich, der auf Schienen (28) läuft. Der Schlitten (17) ist als Plattform ausgebildet, auf der auch die Roboter (4) angeordnet sind. Die Roboter (4) werden zum Rahmenwechsel zusammen mit dem Gestell (18) zwischen der Arbeitsposition an der Fahrzeugkarosserie (1) und der Wechselposition hin- und herbewegt.

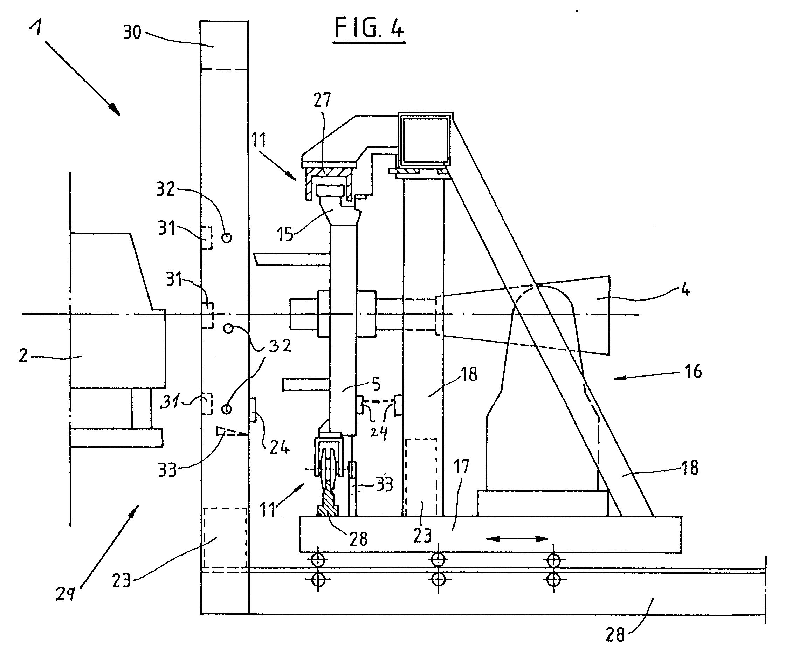

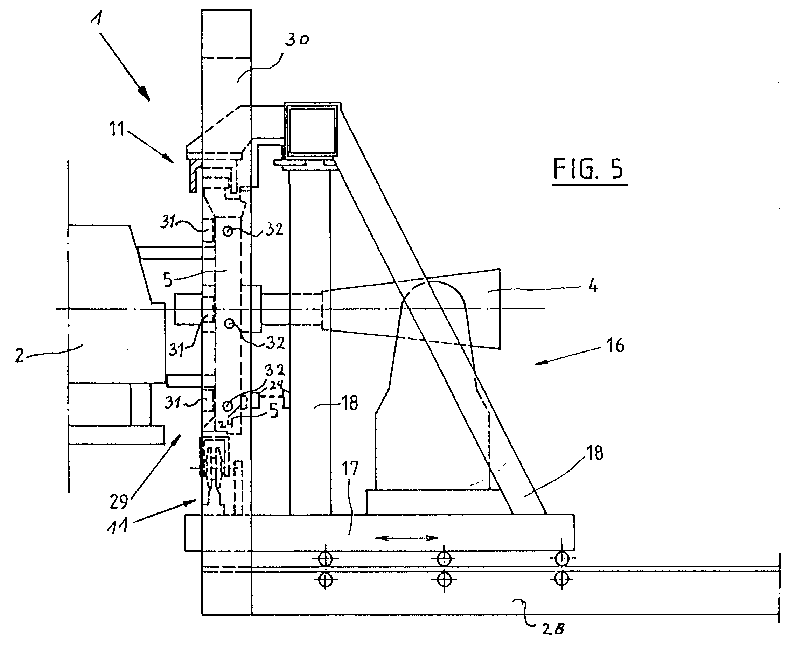

In der Ausführungsform von Fig. 4 und 5 sind die Führungen (11) als obere und untere Horizontalschienen (27,28) ausgebildet, auf bzw. in denen die Spannrahmen (5,6) mit entsprechenden Fahrwerken laufen bzw. geführt sind. Die Führungen (11) sind hierbei in zwei ortsfeste Schienenabschnitte an den Magazinen (7,8) und einen mit dem Gestell (18) verbundenen und mit diesem beweglichen Schienenabschnitt unterteilt. Fig. 4 zeigt letzteren mit einer unteren Laufschiene (28) und einer oberen Führungsschiene (27).

Zum Rahmenwechsel fährt das Gestell (18) soweit zurück, bis die Schienenabschnitte der Führungen (11) fluchten. Durch die Schleppeinrichtung (12), beispielsweise in Form einesumlaufenden Kettenantriebes, werden dann zugleich der auszuwechselnde Spannrahmen (5) am Gestell (18) und der neu einzuwechselnde Spannrahmen (6) am einen Magazin (7) ergriffen und mit einer gemeinsamen Hubbewegung längs der Transferlinie (3) verfahren. Das andere Magazin (8) ist entsprechend mit einer leeren Ladestelle (22) an der Führung (11) positioniert, so daß der Spannrahmen (5) direkt in diese Ladestelle (22) einfahren kann, während der neue Spannrahmen (6) auf das Gestell (18) gelangt. Um diese Form des Rahmenwechsels zu ermöglichen, sind alle Magazine (7,8) nicht voll bestückt, sondern lassen zumindest eine Ladestelle (22) leer.

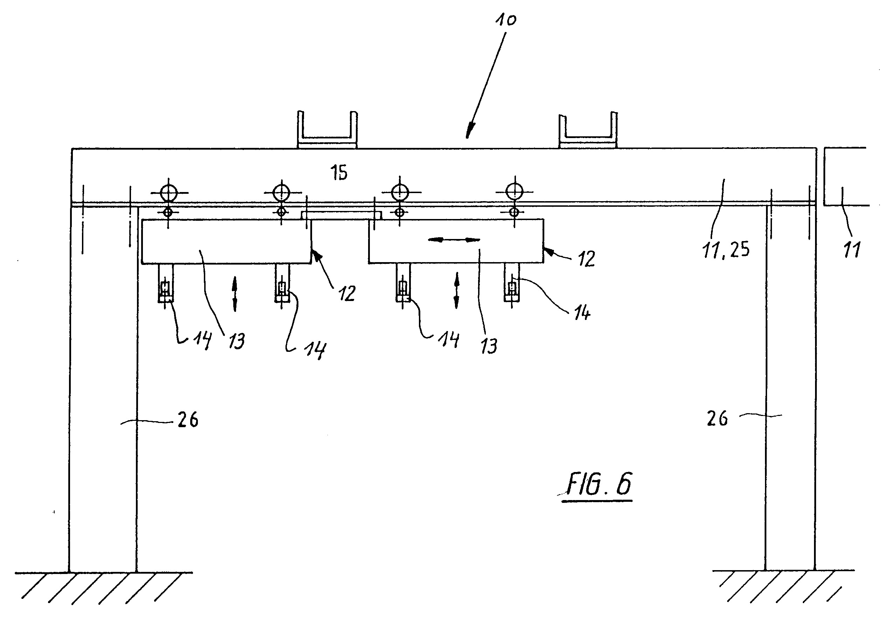

Fig. 6 zeigt eine alternative Form einer Transportvorrichtung (10). Die Spannrahmen (5,6) sind hierbei an den Führungen (11) mittelbar über die Schleppeinrichtung (12) gelagert. Diese besteht aus zwei miteinander über eine Verbindungsstange (15) gekoppelten, angetriebenen Laufwagen (13), die mit Hubgreifern (14) ausgerüstet sind. Die Führungen (11) sind als ortsfeste, auf Stützen (26) gelagerte, durchgehende Schiene (25) ausgebildet, an der die Laufwagen (13) hin- und herfahren können. Die Spannrahmen (5,6) besitzen am oberen Rand hochragende Flansche, an denen sie von den Hubgreifern (14) untergriffen und aus ihrer Haltestellung an den Magazinen (7,8) bzw. dem Gestell (18) gelöst und nach Verschiebung wieder eingehängt werden können.

Die beiden Laufwagen (13) können auch ohne Hubeinrichtung ausgebildet sein und eine reine Schleppfunktion erfüllen, z.B. für eine Transportvorrichtung (10) nach Fig. 4 und 5.

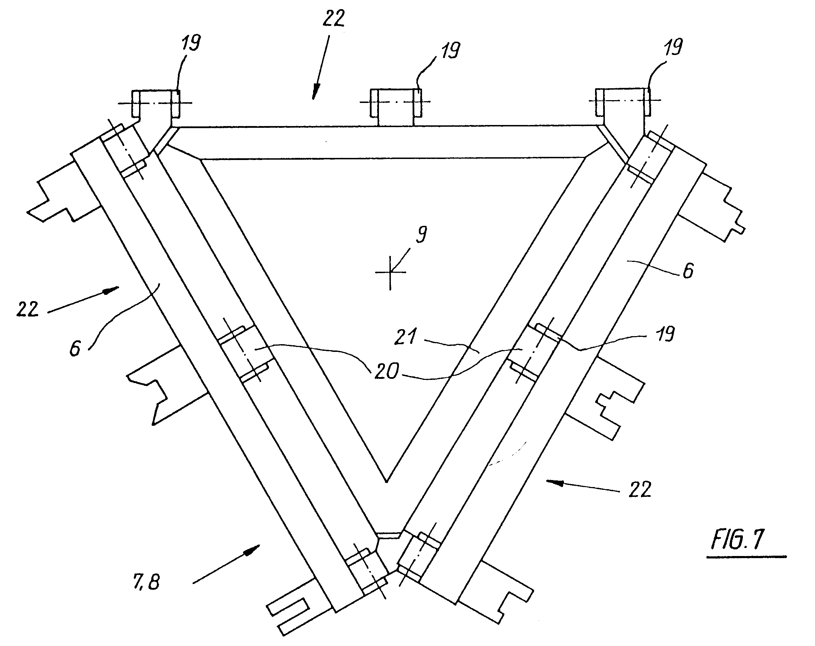

Fig. 7 zeigt eine zu Fig. 6 passende Magazinanordnung. Die Spannrahmen (5,6) besitzen an der Rückseite Halterungen (20), beispielsweise in Form von querliegenden Zapfen oder Rollen, die von Stützen (19) an den Ladestellen (22) des Magazins (7,8) untergriffen werden. Das Gestell (18) besitzt entsprechende Stützen (19). Die Spannrahmen (5,6) werden in einer Hubbewegung von der Schleppeinrichtung (12) mit den Halterungen (20) in die Stützen (19) eingehängt und ausgehoben.

Die Magazingestaltung von Fig. 7 ist auch für die andere Form der Transportvorrichtung (10) entsprechend Fig. 4 und 5 geeignet. Anstelle ortsfester Stützen treten dann schwenkbare Haken (19), die in Ruhestellung zurückgezogen sind und ein Einfahren der Spannrahmen (5,6) auf den magazinfesten Schienenabschnitten der Führungen (11) gestatten. Anschließend schwenken die Haken (19) auf- oder abwärts und umgreifen die Halterung (20).

Zurückkommend auf die vorstehende Beschreibung des Wechselvorganges, erfolgt nach Rahmentausch die Zustellung des vom Gestell (18) aufgenommenen neuen Spannrahmens (5) gegenüber der mit entsprechenden Mitteln exakt positionierten Fahrzeugkarosserie (2). Die Zustellvorrichtung (16) fährt nach vorn und bringt den Spannrahmen (5) in die Arbeitsposition. Um den Spannrahmen (5) exakt zu positionieren und in der gewünschten Lage festzuhalten, ist ein ortsfestes Fixierportal (30) vorgesehen, das innenseitig Anschläge (31) aufweist, gegen die der Spannrahmen (5) von der Zustellvorrichtung (16) bewegt wird. Hierbei kann über eine geeignete Hubeinrichtung (33) der Spannrahmen (5) auch zur exakteren Positionierung vom Gestell (18) bzw. den Führungen (11) etwas gelöst werden. Wie in Fig. 4 dargestellt, kann die Hubeinrichtung (33) beispielsweise aus einer ortsfesten Rampe im Bereich des Fixierportals (30) bestehen.. Alternativ kann die Hubeinrichtung (33) auch aus mehreren Hubzylindern auf dem Schlitten (17) bestehen. Der Spannrahmen (5) wird in der Anschlagstellung und der angehobenen Position über geeignete Fixierelemente (32) am Fixierportal (30) festgehalten. Dies können beispielsweise ausfahrbare Indexe, Klammern, Spannklauen oder dergleichen sein. Der Spannrahmen (5) ist nun mit seinen Werkzeugen exakt gegenüber der Fahrzeugkarosserie (2) ausgerichtet.

Wie Fig. 4 und 5 im weiteren verdeutlichen, kann am Fixierportal (30) und/oder am Gestell (18) eine Betriebsmittelversorgung (23) für Strom, Kühlwasser, Druckluft, Hydraulik oder dergleichen angeordnet sein. Sie ist mit einer oder mehreren passenden Kupplungen (24) versehen, die mit einem entsprechenden Gegenstück am Spannrahmen (5) in Eingriff treten. In Fig. 4 ist z.B. eine Kupplung (24) für Stromzuführung über einen Ausleger am Fixierportal (30) befestigt und wird durch die Zustellbewegung des Spannrahmens (5) beaufschlagt. Eine weitere Kupplung (24) für die Pneumatik- und Hydraulikversorgung befindet sich am Gestell (18) und wird mit einem Gegenstück am Spannrahmen verbunden.

In den gezeigten Ausführungsformen mit starren Trommelgestellen (21) sind die Magazine (7,8) mit einem positioniergesteuerten Drehantrieb versehen. Anstelle einer festen Trommel können die Magazine (7,8) auch als relativ flexible Umlaufmagazine mit Kettenförderer oder dergleichen ausgebildet sein.

## Patentansprüche

1. Bearbeitungsstation (1) für Werkstücke (2), insbesondere von Fahrzeugkarosserien, in einer Bearbeitungsvorrichtungen (4) enthaltenden Transferlinie (3), bei der Magazine (7,8) für auswechselbare Spannrahmen (5,6) zu beiden Seiten neben der Transferlinie (3) sowie, bezogen auf die Transferrichtung vor und/oder hinter der Arbeitsstelle (29) angeordnet sind und bei der eine Transportvorrichtung (10) vorgesehen ist, welche die Spannrahmen (5,6) in einer Ebene parallel zur Transferlinie (3) vom Magazin (7,8) zu einer quer dazu versetzbaren Zustellvorrichtung (16) und zurück bewegt, dadurch **gekennzeichnet**, daß das einzelne Magazin (7,8) als ein um eine horizontale oder vertikale Achse (9) drehbares, mehrere Spannrahmen (5,6) aufnehmendes Trommelgestell (21) ausgebildet ist, bei dem in seiner Ruhestellung sich jeweils ein Spannrahmen (5,6) in der parallel zur Transferlinie (3) sich erstreckenden Ebene befindet.

2. Bearbeitungsstation nach Anspruch 1, dadurch **gekennzeichnet**, daß die Magazine (7,8) paarweise durch eine gemeinsame Transportvorrichtung (10) verbunden sind, die in einer Bewegung den alten Spannrahmen (5) von der Arbeitsstelle (29) in ein Magazin (7,8) verfrachtet und aus dem anderen Magazin (8,7) einen neuen Spannrahmen (6) zur Arbeitsstelle (29) bringt.

3. Bearbeitungsstation nach Anspruch 1 oder 2, dadurch **gekennzeichnet**, daß die Magazine (7,8) mehrere Ladestellen (22) für Spannrahmen (5,6) aufweisen, von denen mindestens eine unbesetzt ist.

4. Bearbeitungsstation nach Anspruch 1 oder einem der folgenden, dadurch **gekennzeichnet**, daß die Transportvorrichtung (10) längs der Transferlinie (3) verlaufende Führungen (11) und Schleppeinrichtungen (12) für die Spannrahmen (5,6) aufweist.

5. Bearbeitungsstation nach Anspruch 4, dadurch **gekennzeichnet**, daß an der Arbeitsstelle (29) ein Gestell (18) zur Aufnahme der Spannrahmen (5,6) und eine Einrichtung (30,31,32,33) zur exakten Positionierung und Fixierung des Spannrahmens (5) gegenüber dem Werkstück (2) angeordnet sind.

6. Bearbeitungsstation nach Anspruch 5, dadurch **gekennzeichnet**, daß das Gestell (18) quer zur Transferlinie (3) verfahrbar angeordnet ist.

7. Bearbeitungsstation nach Anspruch 5 oder 6, dadurch **gekennzeichnet**, daß im Bereich der Arbeitsstelle (29) eine Betriebsmittel-Versorgung (23) mit einer oder mehreren Kupplungen (24) zum Anschluß der Spannrahmen (5) angeordnet ist.

8. Bearbeitungsstation nach Anspruch 6, 7 oder 8, dadurch **gekennzeichnet**, daß das Gestell (18) und eine oder mehrere Bearbeitungsvorrichtungen (4) auf einem gemeinsamen, quer zur Transferlinie (3) verfahrbaren Schlitten (17) angeordnet sind.

## Claims

1. Machining station (1) for workpieces (2), in particular vehicle bodies, in a transfer line (3) which contains machining apparatuses (4), in the case of which magazines (7, 8) for exchangeable clamping frames (5, 6) are arranged on both sides, beside the transfer line (3) and, in relation to the transfer direction, upstream and/or downstream of the working location (29), and in the case of which there is provided a transporting apparatus (10) which moves the clamping frames (5, 6), in a plane parallel to the transfer line (3), from the magazine (7, 8) to a feeding apparatus (16), which can be displaced transversely thereto, and back, characterized in that the individual magazine (7, 8) is designed as a drum-type framework (21) which can rotate about a horizontal or vertical axis (9), receives a plurality of clamping frames (5, 6) and in the case of which, in its rest position, in each case one clamping frame (5, 6) is located in the plane extending parallel to the transverse line (3).

2. Machining station according to Claim 1, characterized in that the magazines (7, 8) are connected in pairs by a common transporting apparatus (10) which, in one movement, carries the old clamping frame (5) from the working location (29) into a magazine (7, 8) and brings a new clamping frame (6) out of the other magazine (8, 7) to the working location (29).

3. Machining station according to Claim 1 or 2, characterized in that the magazines (7, 8) exhibit a plurality of loading locations (22) which are intended for clamping frames (5, 6) and of which at least one is unoccupied.

4. Machining station according to Claim 1 or one of the following claims, characterized in that the transporting apparatus (10) exhibits guides (11), running along the transfer line (3), and hauling apparatuses (12) for the clamping frames (5, 6).

5. Machining station according to Claim 4, characterized in that there are arranged, at the working location (29), a framework (18) for receiving the clamping frames (5, 6) and a device (30, 31, 32, 33) for positioning and fixing the clamping frame (5) in a precise manner with respect to the workpiece (2).

6. Machining station according to Claim 5, characterized in that the framework (18) is arranged such that it can be displaced transversely to the transfer line (3).

7. Machining station according to Claim 5 or 6, characterized in that there is arranged, in the region of the working location (29), an operating-medium supply means (23) with one or more couplings (24) for connection of the clamping frames (5).

8. Machining station according to Claim 6, 7 or 8, characterized in that the framework (18) and one or more machining apparatuses (4) are arranged on a common carriage (17) which can be displaced transversely to the transfer line (3).

## Revendications

1. Poste de travail (1) pour pièces à usiner (2), notamment pour des carrosseries de véhicules, dans une chaîne transfert (3) contenant des dispositifs de traitement (4) et dans lequel des magasins (7,8) pour des cadres de serrage interchangeables (5,6) sont disposés de part et d'autre à côté de la chaîne transfert (3) ainsi que, d'une manière rapportée à la direction de transfert, en amont et/ou en aval du site de travail (29), et dans lequel il est prévu un dispositif de transport (10), qui déplace les cadres de serrage (5,6) dans un plan parallèle à la chaîne transfert (3), d'un magasin (7,8) jusqu'à un dispositif d'avance (16) pouvant être déplacé transversalement par rapport à la chaîne transfert, et les ramène, caractérisé par le fait que le magasin individuel (7,8) est réalisé sous la forme d'un châssis à tambour (21), qui peut tourner autour d'un axe horizontal ou vertical (9) et reçoit plusieurs cadres de serrage (5,6) et dans lequel, lorsqu'il se trouve dans sa position de repos, respectivement un cadre de serrage (5,6) est situé dans le plan qui s'étend parallèlement à la chaîne transfert (3).

2. Poste de travail suivant la revendication 1, caractérisé en ce que les magasins (7,8) sont réunis par couples par un dispositif de transport commun (10) qui, lors d'un déplacement, transfère l'ancien cadre de serrage (5) depuis le site de travail (22), dans un magasin (7,8) et amène de l'autre magasin (8,7) un nouveau cadre de serrage (6) au site de travail (29).

3. Poste de travail suivant la revendication 1 ou 2, caractérisé par le fait que les magasins (7,8) possèdent plusieurs zones de chargement (22) pour des cadres de serrage (5,6), dont l'une au moins est inoccupée.

4. Poste de travail suivant la revendication 1 ou l'une des suivantes, caractérisé par le fait que le dispositif de transfert (10) possède des guides (11), qui s'étendent le long de la chaîne transfert (3), et des dispositifs de remorquage (12) pour les cadres de serrage (5,6).

5. Poste de travail suivant la revendication 4, caractérisé par le fait que sur le site de travail (29) sont disposés un châssis (18) servant à recevoir les cadres de serrage (5,6) et un dispositif (30,31,32,33) servant à positionner et fixer de façon précise le cadre de serrage (5) par rapport à la pièce à usiner (2).

6. Poste de travail suivant la revendication 5, caractérisé en ce que le châssis (18) est disposé de manière à être déplaçable transversalement par rapport à la chaîne transfert (3).

7. Poste de travail suivant la revendication 5 ou 6, caractérisé par le fait qu'au voisinage du site de travail (29) est disposé un système (23) d'alimentation en moyens de fonctionnement, comportant un ou plusieurs accouplements (24) pour le raccordement des cadres de serrage (5).

8. Poste de travail suivant la revendication 6, 7 ou 8, caractérisé par le fait que le châssis (18) et un ou plusieurs dispositifs de traitement (4) sont disposés sur un chariot commun (17), déplaçable transversalement par rapport à la chaîne transfert (3).
